Europäisches Patentamt

European Patent Office

Office européen des brevets

(11) Veröffentlichungsnummer: **0 227 963**

**A2**

## (12) EUROPÄISCHE PATENTANMELDUNG

(21) Anmeldenummer: 86116598.3

(22) Anmeldetag: 28.11.86

(51) Int. Cl.⁴: **A01L 1/04**

(30) Priorität: 04.12.85 DE 3542759

(43) Veröffentlichungstag der Anmeldung:
08.07.87 Patentblatt 87/28

(84) Benannte Vertragsstaaten:
AT BE CH ES FR GB IT LI LU NL SE

(71) Anmelder: **Cravan, Hans-Georg**
**Schweriner Strasse 6c**
**D-2218 Wrist(DE)**

(72) Erfinder: **Cravan, Hans-Georg**
**Schweriner Strasse 6c**
**D-2218 Wrist(DE)**

(74) Vertreter: **Struck, Willi, Dr.-Ing.**
**Friedrich-Ebert-Strasse 10f**
**D-2080 Pinneberg(DE)**

(54) **Mehrteiliges Hufeisen.**

(57) Die Erfindung betrifft ein mehrteiliges Hufeisen mit in der Längsachse des Hufeisens getrennten Schenkeln und bezweckt ein Hufeisen zu schaffen, welches einfach in seinem Aufbau und leicht vom Schmied zu bearbeiten ist und das allen Anforderungen an die Anpassung an die Hufmechanik und einen ungehinderten Bewegungsablauf genügt.

Erfindungsgemäß wird dazu vorgeschlagen, die beiden Schenkel als vollständig voneinander getrennte Halbhufeisen auszuführen, bei denen im Bereich der Schenkelenden bzw. des Strahles beim Pferd quer zur Längsachse des Hufeisens bzw. der Halbhufeisen gerichtete, einander zugewandte in einer gemeinsamen Hülse geführte Stege angeordnet sind.

EP 0 227 963 A2

## Mehrteiliges Hufeisen

Die Erfindung betrifft ein mehrteiliges Hufeisen mit in der Längsachse des Hufeisens getrennten Schenkeln.

Derartige Hufeisen sind im Prinzip bekannt. Bei den bekannten Hufeisen dieser Art sind jedoch die beiden Schenkel an ihren vorderen Enden im Bereich der Kappe gelenkig miteinander verbunden - (DE-AS 21 08 818). Diese Hufeisen tragen zwar der Forderung Rechnung, daß sich der Huf beim Auffußen in den Trachtenwänden leicht spreizen kann, sie verhindern aber ebenso wie starre Hufeisen auch das unbehinderte Wachsen des Hufes in der Breite insbesondere in seinem vorderen Teil.

Konstruktionen von Hufeisen, die zur Erreichung einer besseren Elastizität aus Eisen-Kunststoff-Kombinationen aufgebaut sind, um die genannten Schwierigkeiten zu beheben, sind aufwendig und teuer und stellen hohe Anforderungen an die handwerklichen Fähigkeiten der Hufschmiede.

Durch die vorliegende Erfindung sollen die Nachteile der bekannten Hufeisen vermieden und insbesondere die Aufgabe gelöst werden, ein Hufeisen zu schaffen, welches einfach in seinem Aufbau und leicht vom Schmied zu bearbeiten ist und das allen Anforderungen an die Anpassung an die Hufmechanik und einen ungehinderten Bewegungsablauf genügt.

Zur Lösung dieser Aufgabe wird erfindungsgemäß bei einem Hufeisen der eingangs genannten Art vorgeschlagen, die beiden Schenkel als vollständig voneinander getrennte Halbhufeisen auszuführen, bei denen im Bereich der Schenkelenden bzw. des Strahles beim Pferd quer zur Längsachse des Hufeisens bzw. der Halbhufeisen gerichtete, einander zugewandte in einer gemeinsamen Hülse geführte Stege angeordnet sind. Damit ein ausreichendes Spiel zwischen der Hülse und den Stegen mit einer großen Bewegungsmöglichkeit gegeben ist, sollen die Innenabmessungen der Hülse merklich größer sein als die Außenabmessungen der Stege. Beispielsweise sollen bei Innenabmessungen der Hülse von 17 $^\times$ 7 mm die Abmessungen der Stege 16 $^\times$ 6 mm betragen. Weiterhin sollen die Stege an ihren vorderen Enden mit Abschrägungen, deren Abschrägungswinkel bei großen Eisen etwa 30° und bei kleinen Eisen etwa 45° betragen kann, versehen sein, durch die verhindert werden soll, daß die Hülse über einem sich senkrecht zur Hülsenrichtung erstre ckenden Hohlraum liegt, wobei dann anftretende Knickbelastungen allein von der Hülse aufgenommen werden müßten. Die Hülse könnte bei den vorgeschlagenen Abschrägungen also schwächer ausgeführt werden.

Nach einem weiteren Merkmal der Erfindung können zwischen dem Huf und den Schenkeln bzw. Halbhufeisen noch zusätzliche Korrektur- und/oder Feder-bzw. Dämpfungsplatten aus elastischem Kunststoffmaterial, Gummi, Leder oder Kork angebracht werden, um direkte Stöße vom Metallhufeisen auf den Huf zu mildern und um eventuelle Hufunregelmäßigkeiten auszugleichen. Die Halbhufeisen können mit Falzen und Nagellöchern in an sich bekannter Weise versehen sein und seitliche Kappen (Aufzüge) aufweisen.

Auf der beiliegenden Zeichnung sind beispielsweise Ausführungsformen des erfindungsgemäßen Hufeisens dargestellt. Auf der Zeich-nung zeigen

Fig. 1 eine Ansicht von oben auf das erfindungsgemäße Hufeisen mit getrennten Schenkeln,

Fig. 2 einen Schnitt durch dieses Hufeisen nach der Linie AA in Fig. 1,

Fig. 3 eine Ansicht von vorn auf das Hufeisen mit dem Huf und

Fig. 4 den Huf und das Hufeisen in Seitenansicht.

In den Figuren sind gleiche Teile mit gleichen Bezugszeichen versehen.

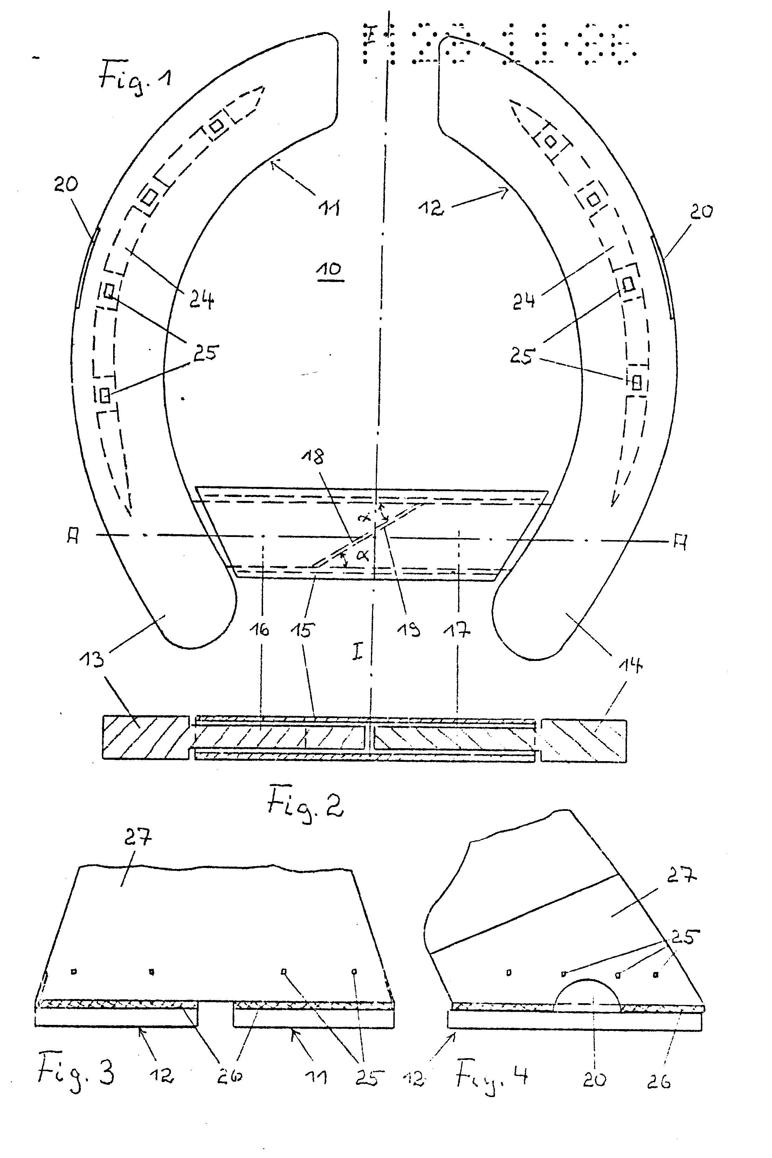

In Fig. 1 und 2 sind das Gesamthufeisen mit 10 und die zueinandergehörigen Halbhufeisen mit 11 und 12 bezeichnet. Jedes Halbhufeisen besteht aus den Schenkeln 13 und 14 und den an sie angeschweißten Stegen 16 bzw. 17, die an ihren vorderen Enden unter einem Winkel $\alpha$ abgeschrägt sind, was den Vorteil hat, daß unter der die Stege 16, 17 überdeckenden Hülse 15 kein stegfeier Raum in Richtung der Längsachse II des Hufeisens 10 entsteht, durch den bei Belastung der Hülse senkrecht zur Achse II ein Durchknicken der Hülse erfolgen könnte. Durch den schrägen Anschnitt 18, 19 der Stege liegt bei einer solchen Belastungsrichtung immer unter dem Hülsenmantel ein massives Stegstück und bewirkt eine Verstärkung der Hülse 15. Diese kann also relativ schwach ausgebildet sein.

Die beiden Schenkel 13 und 14 in Fig. 1 sind mit Falzen 24 und Nagellöchern 25 ausgeführt.

Bei den Darstellungen der Fig. 3 und 4 ist auch die Anbringung von Korrektur-oder Feder-bzw. Dämpfungsplatten zwischen den Halbhufeisen 11, 12 und dem Huf 27 zu erkennen.

Durch die Erfindung wird ein Hufeisen geschaffen,welches die nachfolgend aufgeführten Vorteile aufweist.

Der Hufmechanismus bleibt erhalten, da das Eisen durch den getrennten Steg, in der Hülse deutlich arbeitet. Das Eisen wächst mit dem Huf in der Breite mit. Der Trachtenab-rieb wird wesentlich verringert, weil der Huf nicht auf den Schenkelenden arbeitet, sondern das Eisen in der Hülse. Daher können Materialien wie Kunststoff, Gummi, Leder und Kork mit aufgenagelt werden, die für Federung und Korrektur sorgen ohne daß sie durch Radierung zerstört werden.

Durch das Spiel in der Hülse, ist hinten eine größere Erweiterung des Eisens als vorne möglich.

Das Eisen kann enger gelegt werden als gewöhnlich. Dadurch geringere Gefahr des Abtretens.

Die Aufzüge können jetzt an die weiteste Stelle des Hufeisens gefertigt werden, somit können sie den Huf nicht mehr einengen.

Geringerer Nageldruck der hinteren Nägel auf die Lederhaut, weil der Huf sich nicht gegen die eingeschlagenen Hufnägel erweitern muß. Ein Vorteil für Dressurreiter ist das geringere Zehengewicht. Die Greifgefahr ist geringer durch die offene Zehe. Da im vorderen Teil der Zehe das Eisen fehlt, kann das Pferd leichter abrollen, daher bessere Zehenrichtung. Der Strahl und Strahlfurchen können mit Huflederkitt unterfüttert werden. So können Strahl und Sohle mittragen. Außerdem können sich nicht so leicht Steine in den Strahlfurchen festsetzen.

## Ansprüche

1. Mehrteiliges Hufeisen mit in der Längsachse des Hufeisens getrennten Schenkeln, dadurch gekennzeichnet, daß die beiden Schenkel (13, 14) als vollständig voneinander getrennte Halbhufeisen ausgeführt sind, bei denen im Bereich der Schenkelenden bzw. des Strahles beim Pferd quer zur Längsachse des Hufeisens bzw. der Halbhufeisen gerichtete, einander zugewandte, in einer gemeinsamen Hülse (15) geführte Stege (16, 17) angeordnet sind.

2. Hufeisen nach Anspruch 1, dadurch gekennzeichnet, daß die Innenabmessungen der Hülse - (15) merklich größer sind als die Abmessungen der Stege (16, 17).

3. Hufeisen nach Anspruch 1 und 2, dadurch gekennzeichnet, daß die Stege (16, 17) an ihren vorderen Enden mit Abschrägungen (18,19) versehen sind.

4. Hufeisen nach Anspruch 3, dadurch gekennzeichnet, daß der Abschrägungswinkel (α) etwa zwischen 30 und 45 Grad beträgt.

5. Hufeisen nach Anspruch 1 bis 4, dadurch gekennzeichnet, daß zwischen dem Huf (27) und den Schenkeln (13, 14) bzw. Halbhufeisen (11, 12) zusätzliche Korrektur-und/oder Feder-bzw. Dämpfungsplatten (28) angeordnet sind.

6. Hufeisen nach Anspruch 5, dadurch gekennzeichnet, daß die Korrektur-und/oder Feder-bzw. Dämpfungsplatten (28) aus elastischem Kunststoffmaterial, Gummi, Leder oder Kork ausgeführt sind.

Fig. 1

Fig. 2

Fig. 3

Fig. 4